# EUROPÄISCHE PATENTSCHRIFT

(11) **EP 2 710 896 B1**
(45) Veröffentlichungstag und Bekanntmachung des Hinweises auf die Patenterteilung: **24.08.2016**
(21) Anmeldenummer: 13183607.4
(22) Anmeldetag: 09.09.2013
(51) Int. Cl.: A22C 11/08, A21C 1/06, B01F 7/08, B01F 7/00, F04C 2/16, F04C 13/00, B65G 33/18

(54) **Lebensmittelfördervorrichtung, sowie Verfahren zum Fördern eines Lebensmittels**
Food conveyor device, and method for conveying a food product
Dispositif d'acheminement de produits alimentaires et procédé d'acheminement d'un produit alimentaire

(30) Priorität: 20.09.2012 DE 102012216912
(43) Veröffentlichungstag der Anmeldung: 26.03.2014
(73) Patentinhaber: VEMAG Maschinenbau GmbH, 27283 Verden/Aller (DE)
(72) Erfinder: Pankoke, Uwe, 27336 Rethem (DE); Kiel, Tobias, 27283 Verden (Aller) (DE); Nilsson, Kersten, 27283 Verden (DE)
(74) Vertreter: Eisenführ Speiser

(56) Entgegenhaltungen:
- EP-A2- 0 294 226
- WO-A1-2012/100465
- DE-A1- 1 529 834
- DE-A1- 3 334 394
- DE-U1-202011 003 212
- SU-A1- 1 405 761
- US-A- 1 848 236

## Beschreibung

Die vorliegende Erfindung betrifft eine Lebensmittelfördervorrichtung, insbesondere für Fleisch oder Teigwaren, mit einem Lebensmittel-Einlass, einem Lebensmittel-Auslass, einer zwischen dem Einlass und dem Auslass angeordneten Förderkammer, und einer sich in der Förderkammer erstreckenden Förderschnecke, sowie ein entsprechendes Verfahren.

Fördervorrichtungen der vorstehend genannten Art werden zur, insbesondere automatisierten, Herstellung und Verarbeitung von pastösen Lebensmitteln wie beispielsweise Fleischbrät oder Teig eingesetzt. Im Folgenden wird synonym für Lebensmittel auch der Begriff "Produkt" verwendet. Im Bereich der Lebensmittelindustrie herrscht einerseits ein hoher Kostendruck, andererseits bestehen hohe Anforderungen an die Produktqualität. Beim Fördern und Verarbeiten pastöser Lebensmittel nimmt die Anwesenheit von Gasen, die in Form von Gasblasen vorliegen, im Produktstrom großen Einfluss auf das Erscheinungsbild des Produkts sowie auf die Verarbeitungsqualität. Verarbeitende Betriebe und Hersteller von Vorrichtungen zur Lebensmittelförderung sind somit in zunehmendem Maße bestrebt, hohe Produktqualität bei gleichzeitig möglichst gutem Erscheinungsbild bereitzustellen.

Hierfür kommt dem Entgasen, das heißt dem Eliminieren großer Gasblasen aus dem Produktstrom, eine große Bedeutung zu. Bekannte Vorrichtungen und Verfahren setzen zum Verkleinern von Gasblasen in dem Produktstrom Düsen ein, welche stromabwärts Verdichtung, wodurch die Strömungsgeschwindigkeit nach der Düse ansteigt und die im Produktstrom befindlichen Gasblasen aufgerissen werden. Obwohl der Vorgang des Eliminierens insbesondere großer Gasblasen bei solchen Vorrichtungen und Verfahren bereits im Allgemeinen zufriedenstellend funktioniert, wird das Produkt in der Düse hohen Scherkräften ausgesetzt, was zu einer Produktstressung führt. Dies wird als nachteilig empfunden. Zudem können keine großen und/oder scherempfindlichen Einlagen durch eine Düse gefördert werden bzw. muss der Düsendurchmesser an die Einlagengröße angepasst werden, was die optimale Funktion der Düse beeinflusst.

Aus EP 0 294 226 A2 ist ein Verfahren und eine Vorrichtung zum Extrudieren von feuchter Vollkornmasse bekannt, wobei ein Zwillingsschraubenextruder eingesetzt wird, der einen stromaufwärts angeordneten schraubenförmigen Zuführbereich, einen stromabwärts angeordneten schraubenförmigen Führungs-Schraubenbereich, zwei Mittenbereiche, und drei Abstreiferbereiche aufweist. Die Abstreiferbereiche wechseln sich mit den Zuführ- und Führungs-Schraubenbereichen ab. Die Anstellwinkel der Abstreifer unterscheiden sich in verschiedenen Bereichen, um unterschiedlich starke Voroder Rücktriebe des geförderten Lebensmittels zu erzeugen.

EP 0 294 226 A2 offenbart eine Vorrichtung entsprechend dem Oberbegriff des Anspruchs 1.

Vor dem Hintergrund lag der vorliegenden Erfindung die Aufgabe zugrunde, eine Lebensmittelfördervorrichtung und ein entsprechendes Verfahren anzugeben, welche eine Eliminierung großer Gasblasen in dem geförderten Lebensmittel bei geringerer Produktstressung ermöglicht.

Die Erfindung löst die ihr zugrunde liegende Aufgabe durch eine Vorrichtung entsprechend Anspruch 1 bzw. durch ein Verfahren entsprechend Anpruch 7. Die Erfindung macht sich hierbei die Erkenntnis zunutze, dass eine Homogenisierung des geförderten Produkts möglichst frühzeitig im Förderstrom eine nachträgliche Beschleunigung und Scherbeanspruchung mittels beispielsweise Düsen entbehrlich macht. Es gelingt mittels eines in der Förderkammer stromabwärts des Förderkammereinlasses vorgesehenen spindelfreien Abschnitts, das geförderte Produkt bereits so zu homogenisieren, dass die beim Lebensmittel-Einlass noch vorhandenen Gasblasen durch das Durchlaufen des spindelfreien Abschnitts bereits verkleinert und verteilt werden. Dies geschieht deswegen, weil in dem spindelfreien Abschnitt keine gezwungene Strömungsbewegung des Lebensmittels vorherrscht, sondern sich das Lebensmittel chaotisch ausbreiten kann. Auf diese Weise homogenisiert und mit kleineren, verteilten Blasen versehen, liefert das aus dem Auslass der Förderkammer abgegebene und ultimativ aus dem Auslass der Lebensmittelfördervorrichtung abgegebene Produkt bereits ein verbessertes Erscheinungsbild, ohne dass das Durchlaufen einer das Produkt stressenden Düse notwendig ist.

Ein weiterer Vorteil der erfindungsgemäßen Lösung ist die durch den spindelfreien Abschnitt erreichte Kompensation von Druckschwankungen. Der spindelfreie Abschnitt wird als Reservoir genutzt, indem er durch das Zuführen von Lebensmittel in den Lebensmittel-Einlass immer vollständig gefüllt wird. Vorzugsweise ist die Steigung der Förderkurve vor dem spindelfreien Abschnitt größer als die Steigung hinter dem Lebensmittel-Einlass immer vollständig gefüllt wird. Vorzugsweise ist die Steigung der Förderkurve vor dem spindelfreien Abschnitt größer als die Steigung hinter dem spindelfreien Abschnitt, so dass immer mehr Material in den spindelfreien Abschnitt hinein als heraus transportiert wird.

Die vorstehend genannten Vorteile ergeben sich sowohl bei Lebensmittelfördervorrichtungen, die eine mit einer einzigen Förderschnecke bestückte Förderkammer aufweisen, als auch insbesondere bei Lebensmittelfördervorrichtungen, die eine mit zwei Förderschnecken bestückte Förderkammer aufweisen. Solche Förderkammern sind auch Bestandteil von Doppelspindelpumpen.

Die Erfindung umfasst, dass die Förderschnecke eine erste Förderschnecke Ist, und die Vorrichtung ferner eine sich in der Förderkammer erstreckende zweite Förderschnecke aufweist, welche kämmend mit der ersten Förderschnecke in Eingriff steht, und indem die zweite Förderschnecke einen einlassseitigen Spindelabschnitt, einen auslassseitigen Spindelabschnitt, und einen die Spindelabschnitte trennenden spindelfreien Abschnitt aufweist.

Die spindelfreien Abschnitte der ersten Förderschnecke und der zweiten Förderschnecke sind axial auf einer Höhe in der Förderkammer angeordnet. Axial ist hierbei bezogen auf die Längsachse der Förderkammer zu verstehen. Bei parallel ausgerichteten Förderschnecken ist axial, demzufolge auch bezogen auf die Schneckenachsen zu verstehen. Dadurch, dass die spindelfreien Abschnitte jeweils auf gleicher Höhe in der Vorderkammer angeordnet sind, ergibt sich im Abschnitt der spindelfreien Abschnitte ein Bereich in der Förderkammer, in dem das von den Förderschnecken bis dahin separat geförderte Lebensmittel zusammengeführt wird, und sich in ungeordneter (chaotischer) Strömung miteinander vermengt. Hierbei wird eine gute Homogenisierung des Lebensmittels und Verteilung der Blasen erreicht.

Vorzugweise ist der spindelfreie Abschnitt bzw. sind die spindelfreien Abschnitte stromabwärts des Förderkammereinlasses angeordnet. Hierdurch wird sichergestellt, dass die Homogenisierung in einem geschlossenen System stattfinden kann. Zugleich ist der spindelfreie Abschnitt bzw. sind die spindelfreien Abschnitte vorzugsweise stromaufwärts des Förderkammerauslasses bzw. des Auslasses der Lebensmittelfördervorrichtung angeordnet.

Gemäß der Erfindung ist die Steigung der Förderschnecken in dem auslassseitigen Spindelabschnitt jeweils im Vergleich zu dem einlassseitigen Spindelabschnitt reduziert. Hierdurch wird erzielt, dass der in dem einlassseitigen Spindelabschnitt geförderte Volumenstrom größer ist als der in dem auslassseitigen Spindelabschnitt geförderte Volumenstrom. Hiermit einhergehend ist eine Verdichtung des Lebensmittels. Diese Verdichtung ermöglicht eine Portionierung unmittelbar im Anschluss an das Durchlaufen der Fördervorrichtung. Dies ist insbesondere im Zusammenhang damit vorteilhaft, dass das Produkt beim Durchlaufen des auslassseitigen Spindelabschnittes bereits durch das Durchlaufen des spindelfreien Abschnittes homogenisiert ist und eine gute Blasenverteilung aufweist.

Vorzugsweise sind in dem auslassseitigen Spindelabschnitt der Förderschnecke oder in dem auslassseitigen Spindelabschnitt der Förderschnecken 1,5 oder mehr Spindelumdrehungen ausgebildet. Hierdurch wird gewährleistet, dass mit hoher Wiederholgenauigkeit portioniert werden kann. Besonders bevorzugt liegt die Zahl der Spindelumdrehungen in einem Bereich von 1,5 bis 2,5. In diesem Auswahl-Bereich wird ein guter Kompromiss aus geringer Produktstressung einerseits und hoher Portioniergenauigkeit andererseits erreicht. Hinzu kommt eine akzeptable Portionierleistung. Die Portioniergenauigkeit wird außerhalb dieses besonders bevorzugten Bereichs dadurch beeinflusst, dass drehwinkelabhängig unterschiedlich viele Kammern zwischen den Förderschnecken gebildet werden.

Die Anzahl der Spindelumdrehungen entspricht der Anzahl der Kammern.

Weiter vorzugsweise sind in dem auslassseitigen Spindelabschnitt der Förderschnecke oder in dem auslassseitigen Spindelabschnitt der Förderschnecken 3 oder weniger Spindelumdrehungen ausgebildet. Hierdurch wird im Zusammenhang mit den bevorzugten Steigungen gewährleistet, dass die Produktbeanspruchung nicht unzulässig hoch wird.

Gemäß einer besonders bevorzugten Ausführungsform weist der spindelfreie Abschnitt der Förderschnecke bzw. der spindelfreie Abschnitt der Förderschnecken eine axiale Länge in einem Bereich von 10 mm bis 50 mm auf.

Hierdurch wird gewährleistet, dass bei gleichzeitig geringem konstruktiven Aufwand und vertretbarem Lebensmitteleinsatz ein ausreichend großes Reservoir zum Einstellen des Dichtbereichs und zum Ausgleichen von Druckschwankungen vorhanden ist. Insbesondere durch ein im Vergleich zu dem einlassseitigen Spindelabschnitt reduzierte Spindelsteigung im auslassseitigen Spindelabschnitt wird dafür gesorgt, dass das Reservoir in dem spindelfreien Abschnitt im Betrieb der erfindungsgemäßen Vorrichtung immer vollständig gefüllt ist.

Die Förderschnecke oder die Förderschnecken sind bei der erfindungsgemäßen Vorrichtung wenigstens in einem Bereich zwischen dem Förderkammereinlass und dem spindelfreien Abschnitt relativ zu der Wand der Förderkammer abgedichtet, und zwar gegen einen Übertritt von Lebensmittel aus dem spindelfreien Abschnitt in Richtung des Förderkammereinlasses. Hierdurch wird gewährleistet, dass das durch den spindelfreien Abschnitt geschaffene Reservoir vollständig gefüllt bleibt und eine optimale Blasenverteilung und Zerkleinerung durch die Vermengung des Fluids in dem vorzugsweise vollständig gefüllten Reservoir vorgenommen werden kann. Zum Verbessern der Entgasung des Lebensmittelstroms ist es von Vorteil, wenn die Abdichtung zwischen den Förderschnecken und der Förderkammer zwischen dem Förderkammereinlass und dem spindelfreien Abschnitt nicht gasdicht ist, sondern lediglich den Übertritt von Lebensmittel verhindert, so dass durch die Komprimierung des Lebensmittels verdrängtes Gas entweichen kann.

Die Erfindung betrifft ferner ein Verfahren zum Fördern eines Lebensmittels, insbesondere Fleisch- oder Teigware, entsprechend Anspruch 7.
Die Erfindung löst die eingangs in Bezug auf die für die eingangs genannte Vorrichtung genannte Aufgabe auch für ein Verfahren der vorsehend genannten Art, mit den Schritten:
Einführen eines Lebensmittels in eine Fördereinrichtung mittels eines Lebensmittel-Einlasses,
Fördern des Lebensmittels durch eine Förderkammer in Richtung eines Lebensmittel-Auslasses, wobei das Lebensmittel in der Förderkammer von einer Förderschnecke oder von zwei kämmend miteinander in Eingriff stehenden Förderschnecken gefördert wird, und
wobei das Lebensmittel in der Förderkammer einen spindelfreien Abschnitt durchläuft, welcher einen einlassseitigen Spindetabschnitt und einen auslassseitigen Spindelabschnitt trennt.

Hinsichtlich der Vorteile des erfindungsgemäßen Verfahrens wird auf die vorstehenden Ausführungen der erfindungsgemäßen Vorrichtung verwiesen. Dies gilt auch für die nachfolgend geschilderten Weiterbildungen des Verfahrens.

Das erfindungsgemäße Verfahren umfasst, dass bei zwei Förderschnecken in der Förderkammer der Schritt ausgeführt wird:
- Zusammenführen des von der ersten Förderschnecke geförderten Lebensmittels mit dem von der zweiten Förderschnecke geförderten Lebensmittel in den spindelfreien Abschnitten, wobei die spindelfreien Abschnitte der ersten Förderschnecke und der zweiten Förderschnecke axial auf einer Höhe in der Förderkammer angeordnet sind.

Weiter vorzugsweise erfolgt das Zusammenführen des von der ersten Förderschnecke geförderten Lebensmittels mit dem von der zweiten Förderschnecke geförderten Lebensmittel stromabwärts eines Förderkammereinlasses.

Weiter umfasst das erfindungsgemäße Verfahren den Schritt:
- Portionieren des geförderten Lebensmittels mittels der Förderschnecke oder der Förderschnecken mittels Durchführen des Lebensmittels durch einen auslassseitigen Spindelabschnitt der Förderschnecke oder der Förderschnecken, wobei die Steigung der Förderschnecke oder die Steigung der Förderschnecken in dem auslassseitigen Spindelabschnitt im Vergleich zu dem einlassseitigen Spindelabschnitt reduziert ist.

Die Erfindung wird im Folgenden anhand eines bevorzugten Ausführungsbeispiels und unter Bezugnahme auf die beigefügten Figuren näher beschrieben. Hierbei zeigen:
Figur 1 eine schematische Darstellung der erfindungsgemäßen Vorrichtung nach dem bevorzugten Ausführungsbeispiel,
Figur 2 eine Detailansicht der erfindungsgemäßen Vorrichtung in Schnittdarstellung, und
Figur 3 eine Projektion der Detailansicht aus Figur 2.

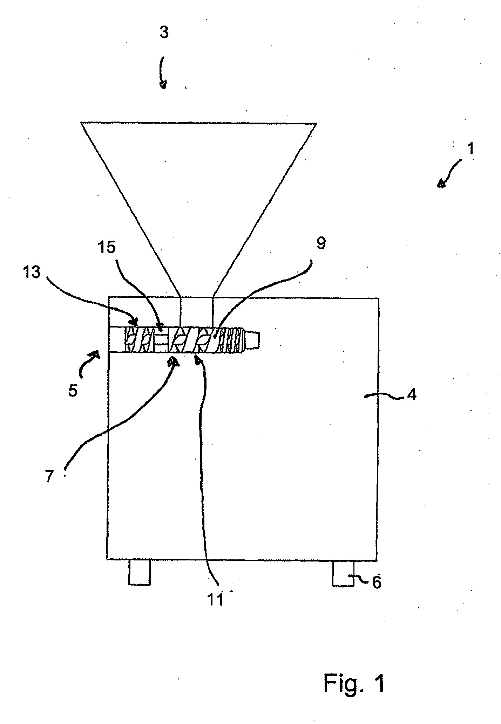

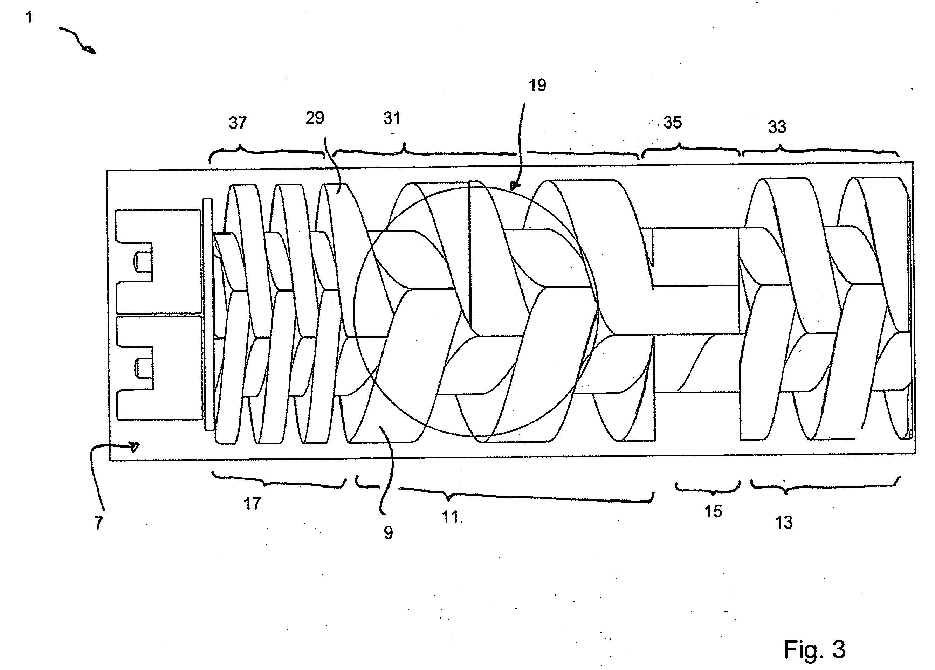

In Figur 1 ist eine Lebensmittelfördervorrichtung 1 gemäß der vorliegenden Erfindung dargestellt. Die Vorrichtung 1 weist einen Lebensmittel-Einlass 3 und eine Lebensmittel-Auslass 5 auf. Zwischen dem Lebensmittel-Einlass 3 und dem Lebensmittel-Auslass 5 erstreckt sich ein Förderweg. Teil dieses Förderweges ist eine Förderkammer 7. In der Förderkammer erstreckt sich eine Förderschnecke 9. Die Förderschnecke 9 kann als einzige Förderschnecke in der Förderkammer 7 vorgesehen sein, oder als Teil einer Doppelspindelpumpe eine erste Förderschnecke darstellen. Aus Figur 3 ergibt sich die Anordnung zweier Förderschnecken in der Förderkammer 7.

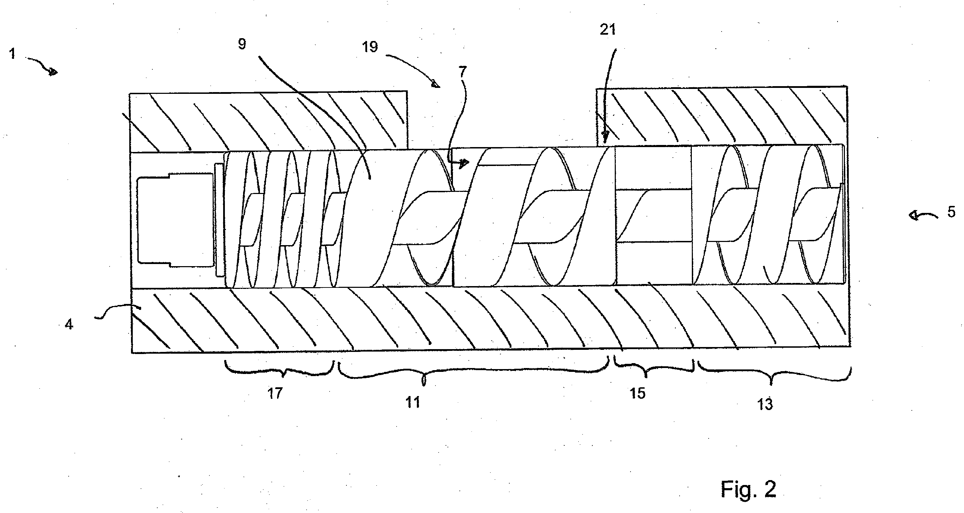

Die Figuren 1 und 2 sind auch gültig für eine Ausführungsform der erfindungsgemäßen Vorrichtung 1 mit nur einer Förderschnecke.

Die Förderschnecke 9 weist in der Förderkammer 7 einen einlassseitigen Spindelabschnitt 11 und einen auslassseitigen Spindelabschnitt 13 auf. Zwischen dem einlassseitigen und dem auslassseitigen Spindelabschnitt 11, 13 erstreckt sich ein spindelfreier Abschnitt 15. In dem spindelfreien Abschnitt 15 ist eine Kavität ausgebildet, die nach außen von der Wand der Förderkammer 7 und nach innen von der Welle der Förderschnecke 9 begrenzt wird. Bei einer Förderkammer mit zwei Förderschnecken, die jeweils einen spindelfreien Abschnitt aufweisen, wird die Kavität durch die beiden spindelfreien Abschnitte definiert. Vorzugsweise sind die spindelfreien Abschnitte bei einer mit zwei Förderschnecken bestückten Förderkammer axial auf gleicher Höhe (siehe Figur 3) angeordnet.

Die Förderkammer 7 ist in einem Grundkörper 4 mit einem Gehäuse untergebracht, welcher mit Fußpunkten 6 zur Aufstellung am Betriebsort ausgerüstet ist.

Die teilweise Schnittdarstellung gemäß Figur 2 zeigt die Anordnung verschiedener Abschnitte in der Förderkammer 7 in deren Längserstreckung bzw. axialer Richtung. Die in der Förderkammer 7 angeordnete Förderschnecke 9 weist auf einer den auslassseitigen Spindelabschnitt 13 und dem spindelfreien Abschnitt 15 abgewandten Seite des einlassseitigen Spindelabschnitts 11 einen Spindelabschnitt 17 mit stark reduzierter Spindelsteigung auf. Die stark reduzierte Spindelsteigung in dem Spindelabschnitt 17 verhindert, dass übermäßig viel, bestenfalls gar kein, Lebensmittel von dem Förderkammereinlass 19 aufwärts entgegen der Förderrichtung in der Förderkammer verteilt wird. Dies vermindert Verunreinigungen und erleichtert die Wartung. Insbesondere wird hierdurch die Vakuumpumpe vor dem Ansaugen von Produkt geschützt. Der Spindelabschnitt 17 geht in den einlassseitigen Spindelabschnitt 11 über, welcher eine bestimmte Steigung aufweist. Die Steigung ist dazu angepasst, durch den Förderkammereinlass 19 zugeführtes Lebensmittel mit einem ersten Volumenstrom in Richtung des Lebensmittel-Auslasses 5 zu fördern.

Stromabwärts von dem einlassseitigen Spindelabschnitt 11 ist der spindelfreie Abschnitt 15 angeordnet. Dieser weist eine vorbestimmte Länge auf, vorzugsweise eine Mindestlänge von 10 mm oder mehr. Der splndelfreie Abschnitt 15 ist dazu angepasst, ihm von der Förderschnecke 9 oder den Förderschnecken zugeführtes Lebensmittel zu sammeln und zu vermischen.

Stromabwärts von dem spindelfreien Abschnitt 15 ist der auslassseitige Spindelabschnitt 13 angeordnet. Der auslassseitige Spindelabschnitt 13 weist eine im Vergleich zu der Steigung des einlassseitigen Spindelabschnitts 11 reduzierte Spindelsteigung auf. Diese reduzierte Spindeisteigung führte dazu, dass dem auslassseitigen Spindelabschnitt zugeführtes Lebensmittel mit geringerer Strömungsgeschwindigkeit, also geringerem Volumenstrom abgefördert wird, als das Lebensmittel von dem einlassseitigen Spindelabschnitt zugeführt wird. Dies hat zwei Effekte: einerseits wird der spindelfreie Abschnitt 15 vollständig mit Lebensmittel befüllt, andererseits findet im spindelfreien Abschnitt 15 und zu gewissem Anteil noch danach im auslassseitigen Spindelabschnitt 13 eine Verdichtung des Lebensmittels statt. Durch diese Verdichtung und die Vermischung des Lebensmittels im spindelfreien Abschnitt 15 wird die Homogenität des Lebensmittels erhöht, indem Luftblasen verteilt und verkleinert werden. Zudem wird Luft durch die Kompression verdrängt.

Für eine vorteilhafte Funktionsweise ist der Spindelabschnitt 15 stromabwärts vom Förderkammereinlass 19 angeordnet und gegen diesen bzw. gegen die Förderkammerwand in einem Bereich 21 lebensmitteldicht abgeschlossen. Hierunter wird verstanden, dass in den spindelfreien Abschnitt 15 gefördertes Lebensmittel nicht außen an der Förderkammerwand entlang entgegen der Förderrichtung entweichen kann. Optional kann die Dichtung derart gewählt sein, kann insbesondere ein Spalt vorgesehen sein, dass das verdrängte Gas entweichen kann.

Figur 3 zeigt eine Draufsicht der Detailansicht zu Figur 2. In den Figuren 1 und 2 war es noch offen gelassen, ob es sich bei der erfindungsgemäßen Vorrichtung um eine Förderkammer 7 mit einer einzigen Förderschnecke 9 oder mit zwei Förderschnecken handelt. Aus Figur 3 ergibt sich die Anordnung eines Ausführungsbeispiels mit zwei Förderschnecken. Die Vorrichtung gemäß Figur 3 weist in der Förderkammer 7 eine erste Förderschnecke 9 und eine zweite Förderschnecke 29 auf. Die Förderschnecken sind korrespondierend, insbesondere spiegelverkehrt ausgebildet und stehen miteinander kämmend in Eingriff. Die erste Förderschnecke 9 ist gemäß den Figuren 1 und 2 ausgebildet. Die zweite Förderschnecke 29 weist analog einen einlassseitigen Spindelabschnitt 31 und einen auslassseitigen Spindelabschnitt 33 mit im Vergleich zu dem einlassseitigen Spindelabschnitt 31 reduzierter Spindelsteigung auf. Der einlassseitige Spindelabschnitt 31 und der auslassseitige Spindelabschnitt 33 sind durch einen spindelfreien Abschnitt 35 voneinander beabstandet bzw. getrennt. Die spindelfreien Abschnitt 15, 35 sind axial auf einer Höhe angeordnet, so dass sie einen zusammenhängenden Freiraum zwischen den Wellen der Förderschnecken 9, 29 und der Wand der Förderkammer 7 ausbilden. Die einlassseitigen Spindelabschnitte 11, 31 sind in Figur 3 unmittelbar unter (wenn man annimmt, dass es sich um eine Draufsicht handelt) dem Förderkammereinlass 19 angeordnet.

Die zweite Förderschnecke 29 weist auf der dem auslassseitigen Spindelabschnitt 33 und dem spindelfreien Abschnitt 35 abgewandten Seite des einlassseitigen Spindelabschnitts 31 einen Spindelabschnitt 37 mit stark reduzierter Spindelsteigung auf. Dieser vollführt die gleiche Funktion wie der Spindelabschnitt 17 der ersten Förderschnecke 9.

## Patentansprüche

1. Lebensmittelfördervorrichtung (1), insbesondere für Fleisch- oder Teigware, mit einem Lebensmittel-Einlass (3), einem Lebensmittel-Auslass (5), einer zwischen dem Einlass und dem Auslass angeordneten Förderkammer (7), einer sich in der Förderkammer (7) erstreckenden ersten Förderschnecke (9), und einer sich in der Förderkammer erstreckenden zweite Förderschnecke (29), welche kämmend mit der ersten Förderschnecke (9) in Eingriff steht,
wobei die Förderschnecken jeweils einen einlassseitigen Spindelabschnitt (11, 31), einen auslassseitigen Spindelabschnitt (13, 33), und einen die Spindelabschnitte trennenden, spindelfreien Abschnitt (15, 35) aufweisen,
wobei die Steigung der Förderschnecken (9, 29) in dem auslassseitigen Spindelabschnitt (13, 33) im Vergleich zu dem einlassseitigen Spindelabschnitt (11, 31) reduziert ist,
wobei die Förderschnecken (9, 29) wenigstens in einem Bereich (21) zwischen einem Förderkammereinlass (19) und dem spindelfreien Abschnitt relativ zu der Wand der Förderkammer gegen einen Übertritt von Lebensmittel aus dem spindelfreien Abschnitt in Richtung des Förderkammereinlasses (19) abgedichtet sind, wobei die spindelfreien Abschnitte (15, 35) axial auf einer Höhe angeordnet sind, **dadurch gekennzeichnet, dass** sie einen zusammenhängenden Freiraum zwischen den Wellen der Förderschnecke (9, 29) und der Wand der Förderkammer (7) ausbilden.

2. Vorrichtung nach Anspruch 1,
wobei die spindelfreien Abschnitte (15, 35) der ersten Förderschnecke (9) und der zweiten Förderschnecke (29) axial auf einer Höhe in der Förderkammer angeordnet sind.

3. Vorrichtung nach einem der vorstehenden Ansprüche,
wobei die spindelfreien Abschnitte (15, 35) stromabwärts des Förderkammereinlasses (19) angeordnet ist bzw. sind.

4. Vorrichtung nach einem der vorstehenden Ansprüche,
wobei in dem auslassseitigen Spindelabschnitt (13, 33) der Förderschnecken 1,5 oder mehr, besonders bevorzugt 1,5 bis 2,5 Spindelumdrehungen ausgebildet sind.

5. Vorrichtung nach einem der vorstehenden Ansprüche,
wobei in dem auslassseitigen Spindelabschnitt (13, 33) der Förderschnecken 5 oder weniger Spindelumdrehungen ausgebildet sind.

6. Vorrichtung nach einem der vorstehenden Ansprüche,
wobei der spindelfreie Abschnitt (15, 35) eine axiale Länge in einem Bereich von 10 mm bis 100 mm aufweist.

7. Verfahren zum Fördern eines Lebensmittels, insbesondere Fleisch- oder Teigware, wobei zwei Förderschnecken (9, 29) in der Förderkammer (7) angeordnet sind wobei die Förderschnecken (9, 29) wenigstens in einem Bereich zwischen einem Förderkammereinlass (19) und einem spindelfreien Abschnitt (15, 35) relativ zu der Wand der Förderkammer (7) gegen einen Übertritt von Lebensmittel aus dem spindelfreien Abschnitt (15, 35) in Richtung des Förderkammereinlasses (19) abgedichtet sind, umfassend die Schritte:
- Einführen eines Lebensmittels in eine Fördereinrichtung mittels eines Lebensmittel-Einlasses (3),
- Fördern des Lebensmittels durch eine Förderkammer (7) in Richtung eines Lebensmittel-Auslasses (5), wobei das Lebensmittel in der Förderkammer (7) von den zwei kämmend miteinander in Eingriff stehenden Förderschnecken (9, 29) gefördert wird, wobei das Lebensmittel in der Förderkammer (7) den spindelfreien Abschnitt (15, 35) durchläuft, welcher einen einlassseitigen Spindelabschnitt (11, 31) und einen auslassseitigen Spindelabschnitt (13,33) trennt,
- Zusammenführen des von der ersten Förderschnecke (9) geförderten Lebensmittels mit dem von der zweiten Förderschnecke (29) geförderten Lebensmittel in den spindelfreien Abschnitten (15, 35), wobei die spindelfreien Abschnitte (15, 35) der ersten Förderschnecke (9) und der zweiten Förderschnecke (29) axial auf einer Höhe in der Förderkammer angeordnet sind, so dass sie einen zusammenhängenden Freiraum zwischen den Wellen der Förderschnecke (9, 29) und der Wand der Förderkammer (7) ausbilden, und
- Portionieren des geförderten Lebensmittels mittels der Förderschnecken (9, 29) mittels Durchführen des Lebensmittels durch den auslassseitigen Spindelabschnitt (13, 33) der Förderschnecken (9, 29), wobei die Steigung der Förderschnecken in dem auslassseitigen Spindelabschnitt (13, 33) im Vergleich zu dem einlassseitigen Spindelabschnitt (11, 31) reduziert ist.

8. Verfahren nach Anspruch 7,
wobei das Zusammenführen des von der ersten Förderschnecke (9) geförderten Lebensmittels mit dem von der zweiten Förderschnecke (29) geförderten Lebensmittel stromabwärts eines Förderkammereinlasses (19) erfolgt.

## Claims

1. A foodstuff conveyor apparatus (1), in particular for meat or dough products, comprising a foodstuff inlet (3), a foodstuff outlet (5), a conveyor chamber (7) arranged between the inlet and the outlet, a first conveyor screw (9) extending in the conveyor chamber (7), and a second conveyor screw (29) extending in the conveyor chamber and being in meshing engagement with the first conveyor screw (9),
wherein the conveyor screws each have an inlet-side spindle portion (11, 31), an outlet-side spindle portion (13, 33) and a spindle-free portion (15, 35) separating the spindle portions,
wherein the pitch of the conveyor screws (9, 29) in the outlet-side spindle portion (13, 33) is reduced in comparison with the inlet-side spindle portion (11, 31),
wherein the conveyor screws (9, 29) are sealed off at least in a region (21) between a conveyor chamber inlet (19) and the spindle-free portion relative to the wall of the conveyor chamber to prevent a transfer of foodstuff from the spindle-free portion in the direction of the conveyor chamber inlet (19),
wherein the spindle-free portions (15, 35) are arranged axially at one height, **characterised in that** they provide an interconnected free space between the shafts of the conveyor screw (9, 29) and the wall of the conveyor chamber (7).

2. Apparatus according to claim 1 wherein the spindle-free portions (15, 35) of the first conveyor screw (9) and of the second conveyor screw (29) are arranged axially at one height in the conveyor chamber.

3. Apparatus according to one of the preceding claims wherein the spindle-free portions (15, 35) are arranged downstream of a conveyor chamber inlet (19).

4. Apparatus according to one of the preceding claims wherein 1.5 or more, particularly preferably 1.5 to 2.5, spindle revolutions, are provided in the outlet-side spindle portion (13, 33) of the conveyor screws.

5. Apparatus according to one of the preceding claims wherein 5 or fewer spindle revolutions are provided in the outlet-side spindle portion (13, 33) of the conveyor screws.

6. Apparatus according to one of the preceding claims wherein the spindle-free portion (15, 35) is of an axial length in a range of 10 mm to 100 mm.

7. A method of conveying a foodstuff, in particular meat or dough products, wherein two conveyor screws (9, 29) are arranged in a conveyor chamber (7), wherein the conveyor screws (9, 29) are sealed off at least in a region between a conveyor chamber inlet (19) and a spindle-free portion (15, 35) relative to the wall of the conveyor chamber (7) to prevent a transfer of foodstuff from the spindle-free portion (15, 35) in the direction of the conveyor chamber inlet (19), comprising the steps:
- introducing a foodstuff into a conveyor device by means of a foodstuff inlet (3),
- conveying the foodstuff through a conveyor chamber (7) in the direction of a foodstuff outlet (5), wherein the foodstuff is conveyed in the conveyor chamber (7) by the two conveyor screws (9, 29) which are in meshing engagement with each other, wherein the foodstuff in the conveyor chamber (7) passes through the spindle-free portion (15, 35) which separates an inlet-side spindle portion (11, 31) and an outlet-side spindle portion (13,33),
- bringing the foodstuff conveyed by the first conveyor screw (9) together with the foodstuff conveyed by the second conveyor screw (29) in the spindle-free portions (15, 35), wherein the spindle-free portions (15, 35) of the first conveyor screw (9) and the second conveyor screw (29) are arranged axially at one height in the conveyor chamber so that they provide an interconnected free space between the shafts of the conveyor screw (9, 29) and the wall of the conveyor chamber (7), and
- portioning of the conveyed foodstuff by means of the conveyor screws (9, 29) by means of passing the foodstuff through the outlet-side spindle portion (13, 33) of the conveyor screws (9, 29), wherein the pitch of the conveyor screws in the outlet-side spindle portion (13, 33) is reduced in comparison with the inlet-side spindle portion (11, 31).

8. A method according to claim 7 wherein the step of bringing the foodstuff conveyed by the first conveyor screw (9) together with the foodstuff conveyed by the second conveyor screw (29) is effected downstream of a conveyor chamber inlet (19).

## Revendications

1. Dispositif de transport d'aliments (1), en particulier de viande ou pâte avec une entrée d'aliments (3), une sortie d'aliments (5), une chambre de transport (7) située entre l'entrée et la sortie, une première vis sans fin (9) s'étendant dans la chambre de transport (7), et une seconde vis sans fin (29) s'étendant dans la chambre de transport, qui est en engagement par engrènement avec la première vis sans fin (9),
les vis sans fin présentant chacune une section de broche (11, 31) côté entrée, une section de broche (13, 33) côté sortie et une section (15, 35) sans broche séparant les sections de broche,
le pas des vis sans fin (9, 29) étant réduit dans la section de broche (13, 33) côté sortie par rapport à la section de broche (11, 31) côté entrée,
les vis sans fin (9, 29) étant rendues étanches au moins dans une zone (21) entre une entrée de chambre de transport (19) et la section sans broche par rapport à la paroi de la chambre de transport contre un passage d'aliments de la section sans broche en direction de l'entrée de chambre de transport (19), les sections (15, 35) sans broche étant disposées axialement à une hauteur, **caractérisé en ce qu'**elles réalisent un espace libre communiquant entre les arbres de la vis sans fin (9, 29) et la paroi de la chambre de transport (7).

2. Dispositif selon la revendication 1,
les sections sans broche (15, 35) de la première vis sans fin (9) et de la seconde vis sans fin (29) étant disposées axialement à une hauteur dans la chambre de transport.

3. Dispositif selon l'une quelconque des revendications précédentes,
les sections sans broche (15, 35) étant disposées en aval de l'entrée de chambre de transport (19).

4. Dispositif selon l'une quelconque des revendications précédentes,
1,5 ou plus, de manière particulièrement préférée 1,5 à 2,5 rotations de broche étant réalisées dans la section de broche côté sortie (13, 33) des vis sans fin.

5. Dispositif selon l'une quelconque des revendications précédentes,
5 rotations de broche ou moins étant réalisées dans la section de broche côté sortie (13, 33) des vis sans fin.

6. Dispositif selon l'une quelconque des revendications précédentes,
la section sans broche (15, 35) présentant une longueur axiale dans une plage de 10 à 100 mm.

7. Procédé de transport d'un aliment, en particulier de viande ou pâte, deux vis sans fin (9, 29) étant disposées dans la chambre de transport (7), les vis sans fin (9, 29) étant rendues étanches au moins dans une zone entre une entrée de chambre de transport (19) et une section sans broche (15, 35) par rapport à la paroi de la chambre de transport (7) contre un passage d'aliments de la section sans broche (15, 35) en direction de l'entrée de chambre de transport (19), comprenant les étapes de :
- introduction d'un aliment dans un dispositif de transport à l'aide d'une entrée d'aliments (3),
- transport de l'aliment par une chambre de transport (7) en direction d'une sortie d'aliments (5), l'aliment étant transporté dans la chambre de transport (7) par les deux vis sans fin (9, 29) se trouvant en engagement l'une avec l'autre par engrènement, l'aliment passant dans la chambre de transport (7) par la section sans broche (15, 35) qui sépare une section de broche (11, 31) côté entrée et une section de broche (13, 33) côté sortie,
- réunion de l'aliment transporté par la première vis sans fin (9) avec l'aliment transporté par la seconde vis sans fin (29) dans les sections sans broche (15, 35), les sections sans broche (15, 35) de la première vis sans fin (9) et de la seconde vis sans fin (29) étant disposées axialement sur une hauteur dans la chambre de transport de sorte qu'elles réalisent un espace libre communiquant entre les arbres des vis sans fin (9, 29) et la paroi de la chambre de transport (7) et
- portionnement de l'aliment transporté à l'aide des vis sans fin (9, 29) par le passage de l'aliment par la section de broche côté sortie (13, 33) des vis sans fin (9, 29), le pas des vis sans fin étant réduit dans la section de broche (13, 33) côté sortie par rapport à la section de broche (11, 31) côté entrée.

8. Procédé selon la revendication 7,
la réunion de l'aliment transporté par la première vis sans fin (9) avec l'aliment transporté par la seconde vis sans fin (29) étant effectuée en aval d'une entrée de chambre de transport (19).
